# EUROPÄISCHE PATENTSCHRIFT

(11) **EP 1 577 972 B1**
(45) Veröffentlichungstag und Bekanntmachung des Hinweises auf die Patenterteilung: **09.05.2007**
(21) Anmeldenummer: 04006126.9
(22) Anmeldetag: 15.03.2004
(51) Int. Cl.: H01M 8/24, H01M 8/04

(54) **Brennstoffzellenanlage mit Spülmodulen sowie Betriebsverfahren dafür**
Fuel cell system with purging modules and method of operation
Système de piles à combustible comprenant des modules de purge et méthode d'opération

(43) Veröffentlichungstag der Anmeldung: 21.09.2005
(73) Patentinhaber: SIEMENS AKTIENGESELLSCHAFT, 80333 München (DE)
(72) Erfinder: Bette, Willi, 91056 Erlangen (DE); Coerlin, Detlev, 91056 Erlangen (DE); Stühler, Walter, 96114 Hirschaid (DE); Voitlein, Ottmar, 91475 Lonnerstadt (DE)

(56) Entgegenhaltungen:
- EP-A- 0 476 610
- WO-A-02/27849
- US-A- 5 413 878

## Beschreibung

Die Erfindung betrifft eine Brennstoffzellenanlage, insbesondere eine Brennstoffzellenanlage, die mehrere kaskadenartig angeordnete Brennstoffzellen-Teilmodule umfasst, sowie ein Verfahren zum Betrieb einer solchen Brennstoffzellenanlage.

Für Brennstoffzellenanlagen werden je nach Anwendungsgebiet unterschiedliche Arten von Brennstoffzellen verwendet. Diese unterscheiden sich insbesondere im Hinblick auf das verwendete Reaktionsgas den Elektrolyten der Brennstoffzelle sowie im Hinblick auf die Betriebstemperatur der Brennstoffzelle. Üblicherweise werden eine Vielzahl einzelner Brennstoffzellen zu einem Brennstoffzellenstapel zusammengefügt, um die elektrische Leistung der Brennstoffzellenanlage zu erhöhen. Die einzelnen Brennstoffzellen sind hierbei elektrisch in Reihe zueinander angeordnet. Beim Betrieb der Brennstoffzellenanlage wird dem Brennstoffzellenstapel, im Folgenden auch als Brennstoffzellenmodul bezeichnet, mit zwei Reaktionsgasen beaufschlagt, nämlich einerseits mit einem Brenn- oder Anodengas, beispielsweise Wasserstoff, und andererseits mit einem Kathodengas, beispielsweise Sauerstoff, Luft oder mit Sauerstoff angereicherte Luft.

Die so genannte PEM-Brennstoffzelle wird bei einer Betriebstemperatur von <80°C betrieben. Das beim Betrieb auf der Kathodengasseite anfallende Reaktionswasser sammelt sich aufgrund dieser niedrigen Betriebstemperaturen als flüssiges Wasser an und muss mit einem Überschuss an Reaktionsgas aus dem Kathodengasraum der Zelle nach außen transportiert werden. Auch im Anodengas- oder Brenngasraum fällt Wasser an, welches ebenfalls mit Gasüberschuss aus der jeweiligen Zelle transportiert werden muss. Dieser Vorgang wird auch als Spülen bezeichnet. Aufgrund des notwendigen Spülvorgangs, der zumindest von Zeit zu Zeit vorgenommen werden muss, tritt ein Brenngasverlust und insbesondere beim Betrieb mit reinem Sauerstoff, auch ein unerwünschter Kathodengasverlust auf. Hierdurch wird der Wirkungsgrad der Brennstoffzellenanlage verringert. Insbesondere bei der Verwendung von Wasserstoff tritt zusätzlich das Problem auf, dass sichergestellt sein muss, dass das austretende Brenngas sich aus Sicherheitsgründen nicht zu einem explosionsfähigen Gemisch anreichern kann.

Um den Verlust an Reaktionsgas möglichst gering zu halten, wird das Prinzip der so genannten Kaskadierung angewandt. Hierbei ist der Brennstoffzellenstapel oder das Brennstoffzellenmodul in mehrere Teilmodule untergliedert, die kaskadenartig nacheinander angeordnet sind. Die einzelnen Teilmodule sind üblicherweise sowohl gasseitig als auch elektrisch in Reihe angeordnet. Die einzelnen Teilmodule werden gasseitig mit Überschuss an Reaktionsgas versorgt, so dass das aus dem ersten Teilmodul austretende Rest-Reaktionsgas dem nachfolgenden Teilmodul eingangsseitig zugeführt wird. Zwischen den einzelnen Teilmodulen sind üblicherweise Wasserabscheider vorgesehen, die das aus dem vorhergehenden Teilmodul mitgeführte Wasser aus dem Gasstrom abtrennen, um dem nachfolgenden Teilmodul ein möglichst wasserfreies Reaktionsgas zuzuführen. Die einzelnen Teilmodule sind hierbei an den verbleibenden Reaktionsgasstrom im Hinblick auf ihr Volumen und Ausgestaltung angepasst. Das in Strömungsrichtung des Reaktionsgases zuletzt angeordnete Teilmodul ist üblicherweise ausgangsseitig mit einem Ventil, insbesondere Magnetventil, verschließbar. Das letzte Teilmodul besteht ebenfalls aus einem Brennstoffzellenstapel oder auch lediglich aus einer einzelnen Brennstoffzelle.

Je nach Reinheit der verwendeten Reaktionsgase fallen bei der Reaktion in den einzelnen Teilmodulen auch Inertgase an, die sich bei geschlossenem Spülventil im Spülmodul anreichern. Aufgrund der Inertgase verringert sich im Laufe des Betriebs die elektrische Leistung des Spülmoduls. Da die einzelnen Teilmodule elektrisch in Reihe geschaltet sind, wird dem letzten Teilmodul (Spülmodul) der im Brennstoffzellenmodul fließende Strom aufgeprägt. Die Reduzierung der elektrischen Leistung schlägt sich daher in einem Spannungsabfall nieder. Ab einem vorgegebenen unteren Spannungsgrenzwert wird üblicherweise das Spülventil geöffnet, so dass mit einem Überschuss an Reaktionsgas die Inertgase sowie das angesammelte Wasser ausgespült wird. Der Anteil des noch reaktionsfähigen Gases, das hierbei mit ausgespült wird, ist stark vom eingestellten Spannungsgrenzwert abhängig. Dieser kann jedoch nicht auf einen beliebig geringen Wert eingestellt werden. Bei herkömmlichen Brennstoffzellenanlagen wird beispielsweise ein Anteil von bis zu 0,5% an unverbrauchten Reaktionsgasen in Kauf genommen.

Alternativ zu dieser spannungsabhängigen Regelung ist auch eine stromabhängige Regelung möglich. Hierbei werden im Spülmodul zwei Zellen oder Zellenstapel elektrisch parallel, gasseitig jedoch in Reihe geschaltet. In der gasseitig letzten Zelle sammeln sich hierbei mehr Inertgase an als in der vorletzten Zelle. Die elektrischen Ströme der beiden parallel geschalteten Zellen werden verglichen und bei Überschreiten einer vordefinierten Stromdifferenz wird die letzte Spülzelle gespült. Bei dieser stromabhängigen Regelung ist der Anteil an unverbrauchten Reaktanten, die ausgespült werden, niedriger als bei der spannungsabhängigen Regelung. Allerdings ist für diese stromabhängige Regelung ein sehr hoher Schaltungsaufwand notwendig. Insbesondere wird hierbei nämlich das Prinzip des Zellstapels durchbrochen. Aufgrund dieses Mehraufwands hat die stromabhängige Regelung keine praktische Bedeutung erlangt.

Der Erfindung liegt die Aufgabe zugrunde, eine Brennstoffzellenanlage, insbesondere eine kaskadierte PEM-Brennstoffzellenanlage, zu ermöglichen, bei der ein hoher Wirkungsgrad erzielt wird und nur ein kleiner Anteil der Reaktionsgase unverbraucht an die Umgebung abgegeben wird.

Die Aufgabe wird erfindungsgemäß durch eine Brennstoffzellenanlage gemäß Anspruch 1 gelöst. Diese weist ein Brennstoffzellen-Hauptmodul sowie ein Brennstoffzellen-Nebenmodul auf. Das Hauptmodul ist an einem Hauptlaststromkreis und das Nebenmodul an einem vom Hauptlaststromkreis unabhängigen Nebenlaststromkreis angeschlossen. Die beiden Module sind weiterhin über eine Gasleitung für ein Rest-Reaktionsgas verbunden, welches vom Hauptmodul dem Nebenmodulzugeführt wird.

Der entscheidende Vorteil bei dieser Brennstoffzellenanlage ist darin zu sehen, dass das Hauptmodul und das Nebenmodul elektrisch unabhängig voneinander geschaltet sind und gleichzeitig das aus dem Hauptmodul austretende Rest-Reaktionsgas dem Nebenmodul als Reaktionsgas zugeführt wird. Durch die elektrisch getrennte Anordnung der beiden Module wird nämlich dem Nebenmodul nicht die im Hauptmodul erzeugte Stromdichte aufgeprägt. Durch diese Anordnung besteht daher die Möglichkeit, das Nebenmodul mit deutlich geringeren Stromdichten zu betreiben, bei gleichzeitig ausreichend hohem Spannungswert. Bei vergleichbarem unterem Spannungsgrenzwert, wie er bei einer herkömmlichen spannungsabhängigen Regelung eingesetzt wird, bedeutet dies, dass das Nebenmodul mit einer deutlich geringeren elektrischen Leistungsabgabe betrieben werden kann. Im Nebenmodul ist daher ein sehr hoher Anteil an Inertgasen zulässig oder umgekehrt ausgedrückt, der Anteil an unverbrauchten Reaktionsgasen wird durch diese Anordnung deutlich gegenüber der herkömmlichen spannungsabhängigen Regelung verringert. Durch diese Maßnahme wird der Gesamtwirkungsgrad der Brennstoffzellenanlage erhöht. Da das Restgas im Nebenmodul verwertet wird kann weiterhin auf eine Kaskadierung im Hauptmodul verzichtet werden, so dass eine einfacher Aufbau ermöglicht ist. Gleichzeitig ist die Menge des austretenden Reaktionsgases geringer. Insbesondere bei der Verwendung von Wasserstoff als Brenngas werden hierbei auch strenge Grenzwerte für den Anteil des ausgespülten Wasserstoffes in die Umgebung eingehalten. Insbesondere bei Brennstoffzellen in abgeschlossenen Teilräumen, beispielsweise in U-Booten, müssen nämlich sehr strenge Grenzwerte für die Wasserstoffkonzentration eingehalten werden.

Zweckdienlicherweise handelt es sich bei der Brennstoffzellenanlage um eine PEM-Brennstoffzellenanlage, die mehrere kaskadenartig angeordnete Teilmodule umfasst, da sich mit dem Prinzip der Kaskadierung sehr hohe Wirkungsgrade erzielen lassen.

Vorzugsweise ist ein Spannungsregler vorgesehen, der die Spannung des Nebenzellenmoduls im Nebenlastkreis regelt. Die Spannung im Nebenmodul wird daher vorzugsweise auf einen konstanten Spannungssollwert geregelt, d.h. bei zunehmender Anreicherung von Inertgasen wird sukzessive die Stromdichte abgesenkt, um den gewünschten Spannungssollwert aufrecht zu erhalten. Zur Spannungsregelung ist hierbei in einer zweckdienlichen Ausgestaltung eine einstellbare elektronische Last , insbesondere ein als DC-DC-Wandler ausgebildeter Stromrichter im Nebenlaststromkreis angeordnet. Auf diese wirkt der Spannungsregler ein. Die elektronische Last bildet daher ein Stellglied bzw. eine Stellgröße für den Spannungsregler. Zweckdienlicherweise wird beim Betrieb beim Erreichen des unteren Regelbereichs eine Spülzelle der Brennstoffzellenanlage gespült, d.h. die sich darin angesammelten Inertgase sowie das sich darin angesammelte Wasser wird zusammen mit einem geringen Anteil an Rest-Reaktionsgas durch Öffnen eines Ventils ausgespült und an die Umgebung abgegeben. Das Öffnen des Ventils kann hierbei spannungsabhängig oder auch stromabhängig erfolgen. D.h. das Ventil wird entweder geöffnet, wenn ein vorgegebener Spannungssollwert nicht mehr gehalten werden kann, oder wenn die Stromdichte einen unteren Stromgrenzwert unterschritten hat.

Zur Erhöhung des Wirkungsgrades wird zweckdienlicherweise die von dem Nebenzellenmodul bereitgestellte elektrische Energie zur Versorgung eines Verbrauchers der Brennstoffzellenanlage herangezogen. Da die Brennstoffzellenanlage ihren Energiebedarf aus dem selbst produzierten elektrischen Strom deckt, wird durch diese Maßnahme die von der Brennstoffzellenanlage beispielsweise in ein Stromnetz abgegebene Menge an elektrischer Energie und damit deren Wirkungsgrad erhöht. Diese Maßnahme wird daher durch die Strom-Hauptversorgung der Brennstoffzellenanlage entlastet.

In einer zweckdienlichen Ausgestaltung ist zwischen dem Hauptmodul und dem Nebenmodul, die gasseitig in Reihe zueinander angeordnet sind, ein Wasserabscheider für das Rest-Reaktionsgas aus dem Hauptmodul vorgesehen.

Das vorstehend beschriebene Konzept mit dem vom Hauptmodul elektrisch unabhängig geschalteten Nebenmodul lässt sich insbesondere durch zwei Varianten verwirklichen. Gemäß einer ersten Variante ist die Brennstoffzellenanlage vorzugsweise derart aufgebaut, dass das Hauptmodul zusammen mit dem Nebenmodul eine Baueinheit bildet, die im Folgenden als Brennstoffzellenmodul bezeichnet wird. Bei diesem Brennstoffzellenmodul ist hierbei das Nebenmodul als Spülmodul ausgebildet, d.h. das Nebenmodul ist gasseitig das letzte Teilmodul des Brennstoffzellenmoduls und ausgangsseitig an eine über ein Spülventil verschließbare Spülleitung mit der Umgebung verbunden. Bei dieser Ausführungsvariante weist das Brennstoffzellenmodul, welches insbesondere als eine einheitliche Baueinheit beispielsweise in einem gemeinsamen Gehäuse ausgebildet ist, zwei Lastkreise auf. Das Brennstoffzellenmodul ist hierbei eingangsseitig an zwei Reaktionsgaszuleitungen angeschlossen und weist ausgangsseitig zwei Spülleitungen für die Restgase auf. Weitergehende Gasanschlüsse sind nicht erforderlich.

Bei dieser ersten Variante ist zweckdienlicherweise eine erste Steuereinrichtung vorgesehen, die derart ausgebildet ist, dass bei Erreichen des unteren Regelgrenzwerts des Spannungsreglers das Öffnen eines Spülventils zum Spülen des Spülmoduls veranlasst wird. Der untere Regelgrenzwert kann hierbei ein Spannungsgrenzwert oder auch ein Stromgrenzwert sein. Das Spülventil wird hierbei für einen definierten Zeitintervall geöffnet und anschließend wieder verschlossen. Durch diese Maßnahme werden die Inertgase aus dem als Spülmodul ausgebildeten Nebenmodul ausgespült.

Gemäß einer vorteilhaften Ausgestaltung ist eine erste Gasleitung mit einem ersten Spülmodul zur Zuführung eines ersten Rest-Reaktionsgases aus dem Hauptmodul, beispielsweise Sauerstoff, verbunden. Gleichzeitig ist das erste Spülmodul weiterhin an eine Reaktionsgaszuleitung zur Zuführung eines zweiten Reaktionsgases, beispielsweise Wasserstoff, als Frischgas angeschlossen. Durch diese Maßnahme wird daher dem Spülmodul jeweils nur eine Gasart als Restgas aus dem Hauptmodul zugeführt. Gleichzeitig wird dem Spülmodul das zweite Reaktionsgas als Frischgas zugeführt. Dadurch lässt sich eine besonders effektive Umsetzung der reaktionsfähigen Anteile im Restgas erzielen.

Vorzugsweise ist gleichermaßen eine zweite Gasleitung mit einem zweiten Spülmodul zur Zuführung eines zweiten Rest-Reaktionsgases (Wasserstoff) aus dem Hauptmodul vorgesehen. Das zweite Spülmodul ist gleichzeitig an einer ersten Reaktionsgaszuleitung zur Zuführung des ersten Reaktionsgases (Sauerstoff) als Frischgas angeschlossen.

Der derartige Aufbau mit den zwei Spülmodulen, die jeweils nur mit einem der beiden Reaktionsgasarten als Restgas und mit dem anderen als Frischgas beaufschlagt werden, ist insbesondere geeignet bei einem Gegenstrombetrieb des Brennstoffzellenmoduls. Bei diesem Gegenstrom-Betrieb werden den einzelnen Teilmodulen die beiden Reaktionsgase im Gegenstrom zugeführt.

Zweckdienlicherweise ist weiterhin vorgesehen, dass den beiden Spülmodulen ausgangsseitig jeweils nur ein erstes bzw. zweites Spülventil zum bedarfsweisen Ausspülen des ersten bzw. zweiten Restgases zugeordnet ist.

Bevorzugt ist das erste Spülmodul ausgangsseitig mit einer Verbindungsleitung für das zweite Reaktionsgas eingangsseitig mit dem zweiten Spülmodul zur Zuführung des zweiten Reaktionsgases verbunden und umgekehrt. Dies bedeutet, dass das dem jeweiligen Spülmodul zugeführte frische Reaktionsgas nach Durchströmen des jeweiligen Spülmoduls dem anderen Spülmodul eingangsseitig zugeführt wird. Hierdurch wird ein effektives Umsetzen auch dieses dem jeweiligen Spülmodul zunächst frischen Reaktionsgases gewährleistet.

Gemäß einer zweiten Variante des Konzepts mit der elektrisch unabhängigen Schaltung des Nebenmoduls ist in einer vorteilhaften Ausgestaltung die Brennstoffzellenanlage derart ausgebildet, dass in Strömungsrichtung des Reaktionsgases das letzte Teilmodul des Hauptmoduls als Spülzellenstapel oder auch nur als einzelne Spülzelle ausgebildet ist. Das Hauptmodul bildet hierbei also ein herkömmliches Brennstoffzellenmodul aus, bei dem mehrere Teilmodule kaskadenartig angeordnet und sowohl gasseitig als auch elektrisch in Reihe geschaltet sind. Die gasseitig letzte Zelle oder der letzte Zellenstapel bilden hierbei Spülzellen. Bei dieser zweiten Variante bildet das Nebenmodul eine eigenständige Baueinheit, die als Restgas-Brennstoffzellenblock, nachfolgend kurz als Restgasblock oder Restgasmodul bezeichnet, ausgebildet ist. Bei dieser zweiten Variante wird daher dem nach Art eines herkömmlichen Brennstoffzellenmoduls ausgebildeten Hauptmodul der eigenständige Restgasblock nachgeschaltet. Wird das Hauptmodul beispielsweise im Gegenstrombetrieb betrieben und weist zwei Spülzellenstapel auf, so wird dem Restgasblock aus zwei Spülzellen das Rest-Reaktionsgas zugeführt. Durch den nachgeschalteten Restgasblock werden daher die reaktionsfähigen Bestandteile des aus dem Hauptmodul ausgespülten Restgases zusätzlich zur Umwandlung in elektrische Energie verwendet.

Bei dieser zweiten Variante ist zweckdienlicherweise eine zweite Steuereinrichtung vorgesehen, die derart ausgebildet ist, dass bei Erreichen eines unteren Spannungsgrenzwerts des Spülzellenstapels das Öffnen eines Spülventils zum Spülen des Spülzellenstapels veranlasst wird. Durch diese Maßnahme wird das aus dem Spülzellenstapel ausgespülte Rest-Reaktionsgas über die Gasleitung dem Restgasblock zugeführt. Die Spülung erfolgt bei der zweiten Variante daher in Abhängigkeit von den elektrischen Werten des Spülzellenstapels des Hauptmoduls, um einen effektiven Betrieb des Hauptmoduls zu gewährleisten.

Zweckdienlicherweise ist hierbei vorgesehen, dass das Spülventil ausgangsseitig am Restgasblock, also in Strömungsrichtung nach diesem, angeordnet ist. Somit wird beim Öffnen des Spülventils zugleich auch der Restgasblock gespült.

Gemäß einer vorteilhaften Weiterbildung weist das Hauptmodul, ähnlich wie in der ersten Variante zwei Spülzellenstapel zum Ausspülen des Restgases auf, wobei jeder der Spülzellenstapel zum Ausspülen eines der beiden Restgases vorgesehen ist. Jeder der beiden Spülzellenstapel wird hierbei von einer zweiten Steuereinrichtung überwacht. Bei Erreichen eines unteren Spannungsgrenzwerts wird dann das dem jeweiligen Spülzellenstapel zugeordnete Spülventil geöffnet. In einer Ausführungsvariante ist hierbei vorgesehen, dass bei Öffnen des einen Spülventils zugleich auch das andere Spülventil geöffnet wird, so dass dem Restgasblock aus beiden Spülzellenstapel Rest-Reaktionsgas zugeführt werden. Insbesondere beim unabhängigen Öffnen der Spülventile, wenn also dem Restgasblock nur eines der Reaktionsgase als Rest-Reaktionsgas zugeführt wird, wird dem Restgasblock das weitere Reaktionsgas als Frischgas zugeführt.

Zur Frischgaszufuhr zumindest eines Reaktionsgases ist gemäß einer bevorzugten Weiterbildung der Restgasblock eingangsseitig an eine Reaktionsgaszuleitung angeschlossen. Über eine dritte Steuereinrichtung wird zudem bei Erreichen eines unteren Spannungsgrenzwerts des Restgasblock ein Reaktionsgasventil zur Versorgung des Restgasblocks mit frischem Reaktionsgas geöffnet. Durch diese Maßnahme wird dem Restgasblock ausreichen reaktionsfähiges Gas zugeführt, so dass der Block insgesamt vor Unterspannung und Abschaltung geschützt ist.

Zweckdienlicherweise ist die dritte Steuereinrichtung weiterhin derart ausgebildet, dass bei Unterschreiten eines Spannungssollwertes frisches Reaktionsgas derart zugeführt wird, dass die Reaktionsgase am Restgasblock in stöchiometrischer Dosierung vorliegen. Der Spannungssollwert ist hierbei in etwa der üblicherweise maximal erreichbare Spannungswert, der sich lediglich bei stöchiometrischer Dosierung erzielen lässt. Über die dritte Steuereinrichtung wird also die Gaszuführung stöchiometrisch gemischt. Hierbei kann sowohl auf Wasserstoff- als auch auf Sauerstoffseite eine FrischgasZufuhr erfolgen.

In einer bevorzugten Ausgestaltung dient die dritte Steuereinrichtung zugleich insbesondere zum Überwachen des Reaktionsgasventils. Hierzu wird der Spannungs- und Stromverlauf des Restgasblocks überwacht. Steigt nämlich sowohl die Spannung als auch der Strom kontinuierlich an, so ist dies ein Indiz dafür, dass das Reaktionsgasventil, insbesondere das für die Wasserstoffzufuhr, offen ist und dauernd Wasserstoff zugeführt wird. Durch diese Maßnahme wird die Funktionsfähigkeit des Reaktionsgasventils überwacht und auf eine weitere Überwachungseinrichtung wird zweckdienlicherweise verzichtet.

Die Aufgabe wird erfindungsgemäß weiterhin gelöst durch ein Verfahren mit den Merkmalen nach Patentanspruch 20. Die im Hinblick auf die Brennstoffzellenanlage angeführten bevorzugten Ausgestaltungen und die damit verbundenen Vorteile sind sinngemäß auch auf das Verfahren anzuwenden.

Ausführungsbeispiele der Erfindung werden im Folgenden anhand der Figuren erläutert. Es zeigen jeweils in schematischen Darstellungen:
- FIG 1: eine Brennstoffzellenanlage in einer schematischen Blockbild-Darstellung gemäß einer ersten Variante,
- FIG 2: eine Brennstoffzellenanlage in einer schematischen Blockbild-Darstellung gemäß einer zweiten Variante, und
- FIG 3: eine Strom-Spannungskennlinie einer PEM-Brennstoffzelle.

In den Figuren werden für gleiche oder äquivalente Teile die gleichen Bezugszeichen verwendet. Der Index H bezieht sich hierbei auf die Wasserstoffseite und der Index O bezieht sich auf die Sauerstoffseite.

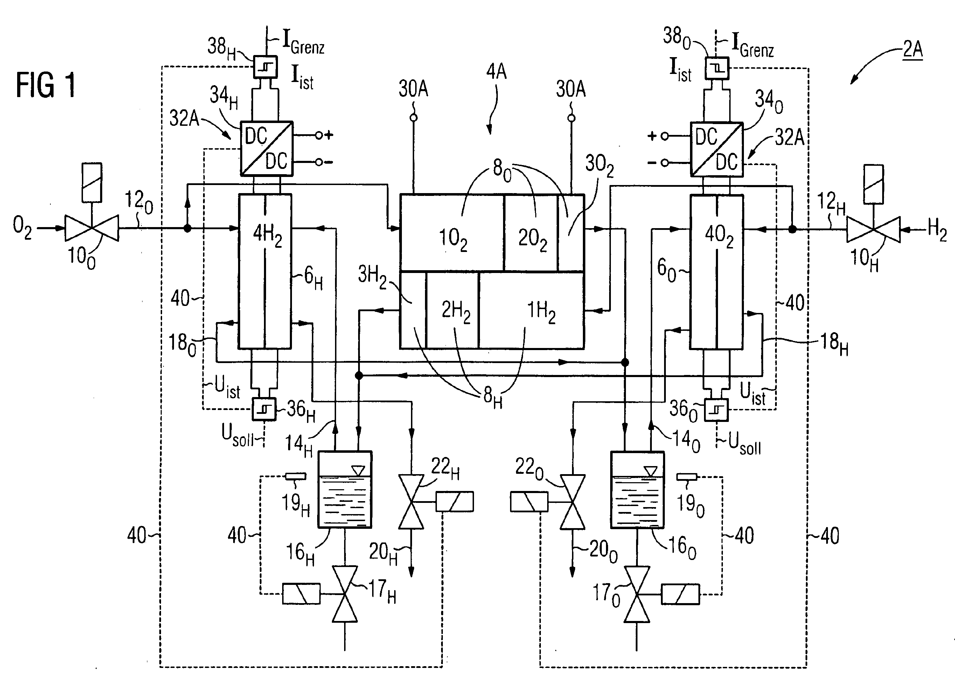

Die Brennstoffzellenanlage 2A gemäß FIG 1 weist ein Hauptmodul 4A sowie zwei als Spülmodule 6 _{H,O} ausgebildete Nebenmodule auf. Das Hauptmodul 4A weist wiederum mehrere Teilmodule 8_{H,O} auf, die nach dem Prinzip der Kaskadierung angeordnet sind. Die Brennstoffzellenanlage 2 wird über ein erstes Reaktionsgasventil 10_{H} für Wasserstoff und ein zweites Reaktionsgasventil 10ₒ für Sauerstoff mit Reaktionsgasen über eine jeweilige Reaktionsgaszuleitung 12 _{H,O} versorgt.

Die einzelnen Module sind jeweils gebildet aus PEM-Brennstoffzellenstapel. Die Spülzellenmodule 6_{H,O} können auch durch eine einzige Brennstoffzelle gebildet sein. Jede Brennstoffzelle sowie die einzelnen Module sind jeweils in zwei Reaktionsgasräume, einerseits für den Sauerstoff und andererseits für den Wasserstoff, unterteilt. Dies ist in den Figuren durch durchgezogene Linien dargestellt.

Die Brennstoffzellenanlage 2A wird von den Reaktionsgasen im Gegenstromprinzip beaufschlagt. Die einzelnen Teilmodule 8_{H,O} der Brennstoffanlage 2A sind entsprechend ihrer Reihenfolge mit 10₂..40₂ und 1H_{2..}4H₂ durchnummeriert. Die einzelnen Teilmodule 8_{H,O} sind gasseitig in Reihe zueinander angeordnet. Dem ersten Teilmodul 8_{H,O} wird jeweils Reaktionsgas im Überschuss und das überschüssige Rest-Reaktionsgas wird anschließend dem nachfolgenden Teilmodul 8_{H,O} eingangsseitig zugeführt. In gleicher Weise sind auch die Spülmodule 6_{H,O} ebenfalls gasseitig in Reihe zum Hauptmodul 4A angeordnet. Das jeweils letzte Teilmodul 8_{H,O} des Hauptmoduls 4A ist daher ausgangsseitig mit dem jeweiligen Spülmodul 6_{H,O} über eine Gasleitung 14_{H,O} verbunden. Zwischen dem Spülmodul 6_{H,O} und dem Hauptmodul 4A sowie zwischen den einzelnen Teilmodulen 8 ist jeweils ein Wasserabscheider 16_{H,O} angeordnet, über den das jeweilige Rest-Reaktionsgas geführt und von Wasser befreit wird, so dass es dem nachfolgenden Teilmodul 8_{H,O} bzw. dem Spülmodul 6_{H,O} möglichst wasserfrei zugeführt wird.

Über ein steuerbares Auslassventil 17_{H,O} wird der Wasserstand im Wasserabscheider 16_{H,O} auf einen bestimmten Niveaubereich eingestellt. Hierzu ist jeweils ein Füllstandsmesser 19_{H,O} vorgesehen.

Aufgrund des Gegenstromprinzips wird jedes der beiden Spülmodule 6_{H,O} jeweils nur mit einem Rest-Reaktionsgas beaufschlagt. Das zweite Reaktionsgas wird über die Reaktionsgaszuleitung 12_{H,O} als Frischgas zugeführt. Mit dem Index 0 ist hierbei das Spülmodul 6 bezeichnet, welchem als Rest-Reaktionsgas Rest-Sauerstoff zugeführt wird. Das dem jeweiligen Spülmodul 6_{H,O} zugeführte frische Reaktionsgas wird über eine Rest-Frischgasleitung 18_{H,O} dem jeweils anderen Spülmodul 6_{H,O} zugeführt. So ist das Spülmodel 6ₒ Wasserstoff-ausgangsseitig über die Rest-Frischgasleitung 18_{H} für das Wasserstoff-Restgas mit der Wasserstoff-Eingangsseite des weiteren Spülmoduls 6_{H} verbunden. D. h. die Rest-Frischgasleitung 18_{H} ist mit der Wasserstoff-Austrittsseite am Hauptmodul 4A parallel bebunden. Bei dem in Fig. 1 dargestellten kaskadierten Aufbau kann die Rest-Frischgasleitung 18_{H} auch mit der Ausgangsseite des ersten Teilmoduls 8_{H} verbunden sein. Jedes der beiden Spülmodule 6_{H,O} ist weiterhin über genau eine Spülleitung 20_{H,O} ausgangsseitig mit einem Spülventil 22_{H,O} verbunden. Durch ein Öffnen des Spülventils 22_{H,O} ist jeweils ein Spülen desjenigen Reaktionsgasraums möglich, dem aus dem Hauptmodul 4A bereits ein Rest-Reaktionsgas zugeführt wurde.

Was die elektrische Seite der Brennstoffzellenanlage 2A betrifft, so ist dem Hauptmodul 4A ein Hauptlaststromkreis 30A und den beiden Spülmodulen 6_{H,O} jeweils ein Nebenlaststromkreis 32A zugeordnet. Der Nebenlaststromkreis 32A weist im Ausführungsbeispiel eine als DC-DC-Wandler ausgebildete einstellbare elektronische Last 34_{H,O} auf. Jedem der Spülmodule 6_{H,O} ist weiterhin ein Spannungsregler 36_{H,O} und der elektronischen Last 34_{H,O} eine erste Steuereinrichtung 38_{H,O} zugeordnet. Der Spannungsregler 36_{H,O} misst die Spannung des Spülmoduls 6_{H,O} und wirkt auf die elektronische Last 34_{H,o} ein, so dass die Spannung des Spülmoduls 6_{H,O} auf einen konstanten Wert geregelt wird. Die Steuereinrichtung 38_{H,O} misst den Zellstrom des Spülmoduls 6_{H,O} und steuert über eine Steuerleitung 40 bei Unterschreiten eines unteren Stromgrenzwerts das Spülventil 22_{H,O} an und öffnet dies.

Der wesentliche Gesichtspunkt der Brennstoffzellenanlage 2A ist darin zu sehen, dass das Hauptmodul 4A und die Spülmodule 6_{H,O} gasseitig in Reihe, jedoch elektrisch unabhängig voneinander geschalten sind. Durch diese Maßnahme lässt sich nämlich durch die vorgesehene Regelung im Nebenlaststromkreis 32 eine deutlich geringere Stromdichte als im Hauptmodul 4A erreichen. Dadurch besteht die Möglichkeit, das den Spülmodulen 6_{H,O} zugeführte Rest-Reaktionsgas effizient zu verwerten. Der Anteil des über die Spülventile 22_{H,O} ausgeschiedenen reaktionsfähigen Gases wird durch diese Maßnahme sehr gering gehalten.

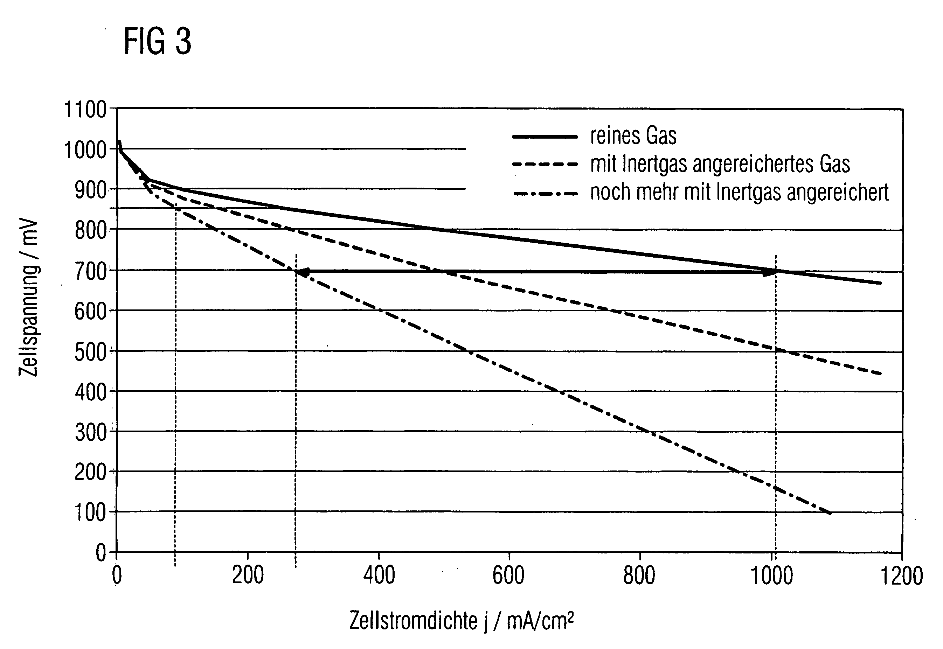

Beim Betrieb der Brennstoffzellenanlage reichern sich in den Spülmodulen 6_{H,O} jeweils Inertgase an, so dass sich die Leistung des Spülmoduls 6_{H,O} verringert. In FIG 3 ist hierzu schematisch die Strom-Spannungs-Kennlinie einer PEM-Brennstoffzelle dargestellt, wobei die durchgezogene fette Linie den Fall mit reinem Reaktionsgas darstellt und die beiden gestrichelten Linien den Fall darstellen, bei dem das Reaktionsgas mit unterschiedlich hohen Anteilen an Inertgas versehen ist. Die untere gestrichelte Linie repräsentiert hierbei einen höheren Inertgasanteil als die obere gestrichelte Linie.

Beim Betrieb der Brennstoffzellenanlage wird derart vorgegangen, dass die Spannung des Spülmoduls 6_{H,O} auf einen vorgegebenen Spannungssollwert geregelt wird, der im Ausführungsbeispiel nach FIG 3 beispielsweise bei 0,7 Volt liegt. Über den Spannungsregler 36_{H,o} und die Steuerleitung 40 wird bei zunehmender Anreicherung mit Inertgasen der Strom durch Einstellung der elektronischen Last 34_{H,O} kontinuierlich heruntergeregelt, bis ein unterer Regelbereich erreicht wird, d.h. bis der Spannungssollwert nicht mehr erhalten werden kann. Wird dieser untere Regelbereich unterschritten, so wird das Spülventil 22_{H,O} des jeweiligen Spülmoduls 6_{H,O} geöffnet und damit die Inertgase sowie das Wasser ausgespült.

Neben der Unterschreitung des Spannungssollwerts kann auch eine Unterschreitung eines Stromsollwerts herangezogen werden, um ein Öffnen des Spülventils 22_{H,O} zu veranlassen. Dies ist schematisch durch die eingezeichnete vertikale Linie auf der linken Seite in der FIG 3 angedeutet. Diese Energie wird an den als DC-DC-Wandler ausgebildeten elektrischen Last 34_{H,O} abgegriffen.

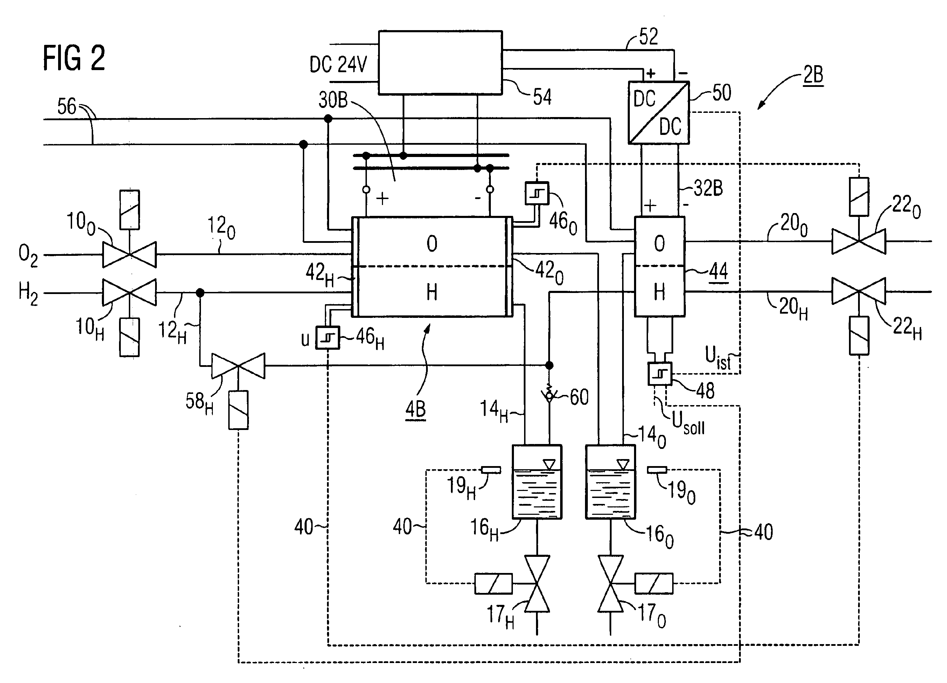

Bei einer zweiten Ausführungsvariante einer Brennstoffzellenanlage 2B gemäß Fig 2 ist das Hauptmodul 4B als herkömmlicher Brennstoffzellenblock mit zwei endseitigen Spülzellenstapeln 42_{H,O} ausgebildet. Dem Hauptmodul 4B ist hier als Ganzes ein Hauptlaststromkreis 30B zugeordnet. Das Hauptmodul 4B ist wiederum nach dem Prinzip der Kaskadierung aufgebaut, wie dies zu FIG 1 erläutert wurde. Das Hauptmodul 4B wird ebenfalls im Gegenstromprinzip beaufschlagt, so dass zwei einander gegenüberliegende Spülzellenstapel 42_{H,O} angeordnet sind, die jeweils mit einem Rest-Reaktionsgas beaufschlagt werden. Diesem als eigenständige Baueinheit ausgebildeten Hauptmodul 4B ist ein ebenfalls als eigenständige Baueinheit ausgebildeter Restgasblock 44 nachgeordnet, dem ein eigener Nebenlaststromkreis 32 zugeordnet ist. Dem Restgasblock 44 wird das Rest-Reaktionsgas des Hauptmoduls 4B eingangsseitig zugeführt. Ausgangsseitig des Restgasblocks 44 ist für jeden der beiden Gasräume ein Spülventil 22_{H,O} vorgesehen.

Jedem der Spülzellenstapel 42_{H,O} ist ein Spannungsmessgerät als zweite Steuereinrichtung 46_{H,O} zugeordnet, die über eine Steuerleitung 40 auf das jeweilige Spülventil 22_{H,O} einwirkt. Weiterhin ist eine dritte Steuereinrichtung 48 mit einem Spannungsregler vorgesehen, über den die Spannung des Restgasblocks 44 in ähnlicher Weise wie die Spannung der Spülmodule 6_{H,O} bei der ersten Ausführungsvariante geregelt wird. Der Laststrom wird hierbei über einen DC-DC-Wandler 50 gesteuert.

Über eine elektrische Nebenleitung 52 wird ein Verbraucher 54 der Brennstoffzellenanlage 2B mit der vom Restgasblock 44 bereitgestellten Energie versorgt. Der Verbraucher 54 bezieht im Normalfall seine Energieversorgung aus dem Hauptlaststromkreis 30B. Durch die zusätzliche Energieversorgung über den Restgasblock 44 wird daher die für den Eigenbedarf aus dem Hauptlaststromkreis 30B abgezweigte Energie verringert und damit steht eine größere Menge für externe Verbraucher zur Verfügung. Der Wirkungsgrad ist dadurch erhöht. Das hier beschriebene Prinzip im Hinblick auf die Verwendung der vom Restgasblock 44 erzeugten Energie kann gleichermaßen auf die Ausführungsvariante gemäß FIG 1 für die von den Spülmodulen 6_{H,O} erzeugte elektrische Energie übertragen werden.

Im Ausführungsbeispiel nach FIG 2 sind das Hauptmodul 4B sowie der Restgasblock 44 parallel an einer gemeinsamen Kühlwasserversorgung 56 angeschlossen. Alternativ hierzu wird der Restgasblock 44 auch einfach durch Konvektion gekühlt. In gleicher Weise wird auch die Brennstoffzellenanlage 2A gemäß der Ausführungsvariante nach FIG 1 gekühlt.

Beim Betrieb der Brennstoffzellenanlage 2B wird über die zweite Steuereinrichtung 46_{H,O} die Spannung im jeweiligen Spülzellenstapel 42_{H,O} überwacht. Bei Unterschreiten eines vorgegebenen Spannungsgrenzwerts wird das jeweils zugeordnete Spülventil 22_{H,O} geöffnet, so dass dem Restgasblock 44 aus dem jeweiligen Spülzellenstapel 42_{H,O} ein Rest-Reaktionsgas zugeführt wird. Das Spülventil 22_{H,O} wird hierbei jeweils nur für ein definiertes Zeitintervall geöffnet. Mit dem Öffnen des Spülventils 22_{H,O} wird zugleich auch das sich im Restgasblock 44 anreichernde Wasser sowie die sich anreichernden I-nergase ausgespült.

Sofern der untere Regelbereich des Spannungsreglers 48 erreicht wird und eine vorgegebene Sollspannung nicht mehr aufrecht erhalten werden kann, wird dies als Indiz dafür gewertet, dass dem Restgasblock 44 nicht mehr genügend reaktionsfähiges Gas zur Verfügung steht. In diesem Fall wird dem Restgasblock 44 über eine Reaktionsgaszuleitung 12_{H} frisches Reaktionsgas (z.B. Wasserstoff) zugeführt. Hierzu ist eine Art Bypass zu der Reaktionszuleitung 12_{H} für das Hauptmodul 4B vorgesehen, in der ein weiteres Reaktionsgasventil 58_{H} angeordnet ist. Dieses wird daher bei Unterschreiten des unteren Spannungsgrenzwerts geöffnet, so dass dem Restgasblock 44 frisches Reaktionsgas zugeführt wird. Um ein Rückströmen in das Hauptmodul 4B zu verhindern ist weiterhin ein Rückschlagventil 60 in der Gasleitung 14_{H} vorgesehen, die das Hauptmodul 4B ausgangsseitig mit dem Restgasblock 44 verbindet. Im Ausführungsbeispiel der FIG 2 ist die Frischgaszuführung anhand der Wasserstoff-Seite dargestellt. Gleichermaßen kann diese auch auf der Sauerstoff-Seite vorgesehen sein. Durch diese Maßnahme wird der Restgasblock vor Unterspannung und Abschaltung geschützt. Der Restgasblock 44 wird also vorzugsweise kontinuierlich betrieben.

Über die dritte Steuereinrichtung 48 wird vorzugsweise darüber hinaus auch überwacht, ob die Spannung des Restgasblocks 44 einen vorgegebenen oberen Spannungssollwert erreicht. Dieser obere Spannungssollwert entspricht insbesondere dem Spannungswert, der sich einstellt, wenn der Restgasblock 44 zumindest annähernd mit einer entsprechend den Reaktionsgleichungen stöchiometrischer Reaktionsgas-Zufuhr versorgt wird. Wird der obere Spannungssollwert unterschritten, veranlasst die dritte Steuereinrichtung 48 das Öffnen des weiteren Reaktionsgasventils 58_{H}, bis der Spannungssollwert wieder erreicht ist. Anhand der Überwachung des Spannungsverlaufs nach Öffnen beispielsweise des Wasserstoff-Reaktionsgasventils 58_{H} wird hierbei ermittelt, welches Reaktionsgas zusätzlich zugeführt werden muss. Die Spannung wird also über das Öffnen/Schließen des Reaktionsgasventils 58_{H} geregelt.

Neben der Spannung wird über die dritte Steuereinrichtung 48 auch der Strom gemessen und überwacht. Fließt Strom und steigt die Spannung am Restgasblock 44 kontinuierlich an, so ist dies ein Indiz dafür, dass der Restgasblock 44 weiterhin mit Reaktionsgas, insbesondere Wasserstoff, versorgt wird. Dies deutet beispielsweise auf einen Defekt beim weiteren Reaktionsgasventil 48_{H} hin. Über die dritte Steuereinrichtung 48 wird daher zugleich auch die Funktionsfähigkeit des weiteren Reaktionsgasventils 58_{H} überwacht und im Fehlerfall wird ein Alarmsignal abgegeben. Dies besteht beispielsweise auch in einem automatischen Absperren des ersten Reaktionsgasventils 10_{H·}

Die dritte Steuereinrichtung 48 ist mit der zweiten Steuereinrichtung 46_{H,O} bevorzugt in einem Gerät integriert. Für die beschriebenen Überwachungs- und Steuerungsfunktionen der Steuereinrichtungen 46_{H,O}, 48 weisen diese neben dem Spannungsmesser bzw. Spannungsregler auch eine geeignete Auswerteeinheit sowie Steuereinheit auf. Gleiches gilt auch für die erste Steuereinrichtung 38_{H,O} sowie für den Spannungsregler 38_{H,O} gemäß der ersten Variante.

## Patentansprüche

1. Brennstoffzellenanlage (2A, B) mit einem Brennstoffzellen-Hauptmodul (4A,B), das an einem Hauptlaststromkreis (30A,B) angeschlossen ist, und mit einem Brennstoffzellen-Nebenmodul (6_{H,O}, 44), das an einem Nebenlaststromkreis (32A,B) angeschlossen ist, wobei das Hauptmodul (4A,B) und das Nebenmodul (6_{H},_{O}, 44) elektrisch unabhängig voneinander geschaltet sind und wobei eine Gasleitung (14_{H,O}) für ein Rest-Reaktionsgas vorgesehen ist, die das Hauptmodul (4A,B) ausgangsseitig mit dem Nebenmodul (6_{H,O}, 44)eingangsseitig verbindet.

2. Brennstoffzellenanlage (2A,B) nach Anspruch 1, bei der das Hauptmodul (4A,B) mehrere kaskadenartig angeordnete Teilmodule (8_{H,O}) umfasst.

3. Brennstoffzellenanlage (2A,B) nach Anspruch 1 oder 2, bei der ein Spannungsregler (36_{H,O}; 48) vorgesehen ist, der die Spannung des Nebenzellenmoduls (6_{H,O}; 42_{H,O}) im Nebenlastkreis (32A,B) regelt.

4. Brennstoffzellenanlage (2A,B) nach Anspruch 3, bei der eine elektronische Last (34_{H,O}) im Nebenlaststromkreis (32A,B) angeordnet ist, die vom Spannungsregler (36_{H,O}; 48) einstellbar ist.

5. Brennstoffzellenanlage (2A,B) nach einem der vorhergehenden Ansprüche, die derart ausgebildet ist, dass dievon dem Nebenzellenmodul (6_{H,O}; 44) bereitgestellte elektrische Energie zur Versorgung der Brennstoffzellenanlage (2A,B) herangezogen wird.

6. Brennstoffzellenanlage (2A,B) nach einem der vorhergehenden Ansprüche, bei der zwischen dem Hauptmodul (4A,B) und dem Nebenmodul (6_{H,O}; 44) ein Wasserabscheider (16_{H,O}) für das Rest-Reaktionsgas vorgesehen ist.

7. Brennstoffzellenanlage (2A,B) nach einem der vorhergehenden Ansprüche, bei der das Hauptmodul (4A) zusammen mit dem Nebenmodul (6_{H,O}) ein Brennstoffzellenmodul bildet und das Nebenmodul als Spülmodul (6_{H,O}) des Brennstoffzellenmoduls ausgebildet ist.

8. Brennstoffzellenanlage (2A,B) nach Anspruch 7, bei der eine erste Steuereinrichtung (38_{H,O}) vorgesehen ist, die derart ausgebildet ist, dass bei Erreichen eines unteren Regelgrenzwerts des Spannungsreglers (36_{H,O}) das Öffnen eines Spülventils (22_{H,O}) zum Spülen des Spülmoduls (6_{H,O}) veranlasst wird.

9. Brennstoffzellenanlage (2A,B) nach Anspruch 7 oder 8, bei der eine erste Gasleitung (14_{O}) mit einem ersten Spülmodul (6_{O}) zur Zuführung eines ersten Rest-Reaktionsgases aus dem Hauptmodul (4A) verbunden ist, wobei das erste Spülmodul (6_{O}) weiterhin an eine Reaktionsgaszuleitung (12_{H}) zur Zuführung eines zweiten Reaktionsgases als Frischgas angeschlossen ist.

10. Brennstoffzellenanlage (2A,B) nach Anspruch 9, bei der eine zweite Gasleitung (14_{H}) mit einem zweiten Spülmodul (6_{H}) zur Zuführung eines zweiten Rest-Reaktionsgases aus dem Hauptmodul (4A) verbunden ist, wobei das zweite Spülmodul (6_{H}) weiterhin an eine erste Reaktionsgaszuleitung (12_{O}) zur Zuführung des ersten Reaktionsgases als Frischgas angeschlossen ist.

11. Brennstoffzellenanlage (2A,B) nach Anspruch 9 und 10, bei der das erste Spülmodul (6_{O}) ausgangsseitig über eine Rest-Frischgasleitung (18_{H}) für das dem ersten Spülmodul (6_{O}) zugeführte zweite Reaktionsgas mit dem zweiten Spülmodul (6_{H}) eingangsseitig verbunden ist und umgekehrt.

12. Brennstoffzellenanlage (2A,B) nach Anspruch 9 bzw. 10 oder 11, bei der dem ersten bzw. dem zweiten Spülmodul (6_{O,H}) ausgangsseitig jeweils nur ein erstes bzw. zweites Spülventil (22_{O,H}) zum bedarfsweisen Ausspülen des ersten bzw. zweiten Rest-Reaktionsgases zugeordnet ist.

13. Brennstoffzellenanlage (2A,B) nach einem der Ansprüche 1 bis 6, bei der das in Strömungsrichtung des Reaktionsgases letzte Teilmodul (8_{H,O}) des Hauptmoduls (4B) als Spülzellenstapel (42_{H,O}) ausgebildet ist, und das Nebenmodul als eigenständige Baueinheit als Restgasblock (44) ausgebildet ist.

14. Brennstoffzellenanlage (2A,B) nach Anspruch 13, bei der eine zweite Steuereinrichtung (46_{H,O}) vorgesehen ist, die derart ausgebildet ist, dass bei Erreichen eines unteren Spannungsgrenzwerts des Spülzellenstapels (42_{H,O}) das Öffnen eines Spülventils (22_{H,O}) zum Spülen des Spülzellenstapels (42_{H,O}) veranlasst wird, so dass das ausgespülte Rest-Reaktionsgas über die Gasleitung (14_{H,O}) dem Restgasblock (44) zugeführt wird.

15. Brennstoffzellenanlage (2A,B) nach Anspruch 14, bei der das Spülventil (22_{H,O}) ausgangsseitig zum Restgasblock (44) angeordnet ist.

16. Brennstoffzellenanlage (2A,B) nach Anspruch 15 oder 14, bei der das Hauptmodul (4B) einen ersten Spülzellenstapel (42_{O}) zum Ausspülen eines ersten Rest-Reaktionsgases sowie einen zweiten Spülzellenstapel (42_{H}) zum Ausspülen eines zweiten Rest-Reaktionsgases aufweist und für jeden Spülzellenstapel (42_{O,H}) eine zweite Steuereinrichtung (46_{O,H}) zur Überwachung der Spannung des jeweiligen Spülzellenstapels (42_{O,H}) vorgesehen ist, die jeweils derart ausgebildet ist, dass bei Erreichen eines jeweiligen unteren Grenzwerts das dem jeweiligen Spülzellenstapel (42_{H,O}) zugeordnete Spülventil (22_{H,O}) geöffnet wird.

17. Brennstoffzellenanlage (2A,B) nach einem der Ansprüche 13 bis 16, bei der der Restgasblock (44) eingangsseitig an eine Reaktionsgaszuleitung (12_{H}) angeschlossen und eine dritte Steuereinrichtung (48) vorgesehen ist, die derart ausgebildet ist, dass bei Erreichen eines unteren Spannungsgrenzwerts des Restgasblocks (44) ein weiteres Reaktionsgasventil (58_{H}) zur Versorgung des Restgasblocks (44) mit frischem Reaktionsgas geöffnet wird.

18. Brennstoffzellenanlage (2A, B) nach einem der Ansprüche 13 bis 17, bei der der Restgasblock (44) eingangsseitig an eine Reaktionsgaszuleitung (12_{H}) angeschlossen und eine dritte Steuereinrichtung (48) vorgesehen ist, die derart ausgebildet ist, dass bei Unterschreiten eines Spannungssollwerts des Restgasblocks (44) das Reaktionsgasventil (58_{H}) derart geöffnet wird, dass dem Restgasblock (44) die Reaktionsgase in stöchiometrischer Dosierung zugeführt werden.

19. Brennstoffzellenanlage (2A,B) nach einem der Ansprüche 13 bis 18, bei der der Restgasblock (44) eingangsseitig an eine Reaktionsgaszuleitung (12_{H}) angeschlossen und eine dritte Steuereinrichtung (48) zur Überwachung des Spannungs- und Stromverlaufs des Restgasblocks (44) derart ausgebildet ist, dass bei ansteigendem Spannungs- und Stromwert über einen Grenzwert hinaus ein Alarmsignal abgegeben wird.

20. Verfahren zum Betreiben einer Brennstoffzellenanlage (2A,B), bei der ein Brennstoffzellen-Hauptmodul (4A,B) an einem Hauptlaststromkreis (30A,B) angeschlossen ist und ein Brennstoffzellen-Nebenmodul (6_{H,O}; 44) an einem Nebenlaststromkreis (32A, B) angeschlossen is derart, daß das Hautptmodul und das Nebenmodul elektrisch unabhängig voneinander geschaltet sind, wobei ein Rest-Reaktionsgas aus dem Hauptmodul (4A,B) dem Nebenmodul (6_{H,O}, 44) zugeführt wird.

## Claims

1. Fuel cell installation (2A, B) having a fuel cell main module (4A, B) which is connected to a main load circuit (30A, B), and having a fuel cell secondary module (6_{H,O}, 44) which is connected to a secondary load circuit (32A, B), with the main module (4A, B) and the secondary module (6_{H,O,} 44) being connected electrically independently of one another and with a gas line (14_{H},_{O}) being provided for any residual reaction gas and connecting the output side of the main module (4A, B) to the input side of the secondary module (6_{H,O}, 44).

2. Fuel cell installation (2A, B) according to Claim 1, in which the main module (4A, B) comprises a plurality of module elements (8_{H,O}) arranged like a cascade.

3. Fuel cell installation (2A, B) according to Claim 1 or 2, in which a voltage regulator (36_{H,O}; 48) is provided, and regulates the voltage of the secondary cell module (6_{H,O}; 42_{H,O}) in the secondary load circuit (32A, B).

4. Fuel cell installation (2A, B) according to Claim 3, in which an electronic load (34_{H,O}) is arranged in the secondary load circuit (32A, B) and can be adjusted by the voltage regulator (36_{H,O}; 48).

5. Fuel cell installation (2A, B) according to one of the preceding claims, which is designed in such a manner that the electrical energy which is produced by the secondary cell module (6_{H,O}; 44) is used to supply a fuel cell installation (2A, B).

6. Fuel cell installation (2A, B) according to one of the preceding claims, in which a water separator (16_{H,O}) for the residual reaction gas is provided between the main module (4A, B) and the secondary module (6_{H,O}, 44).

7. Fuel cell installation (2A, B) according to one of the preceding claims, in which the main module (4A) together with the secondary module (6_{H,O}) forms a fuel cell module, and the secondary module is in the form of a purging module (6_{H,O}) for the fuel cell module.

8. Fuel cell installation (2A, B) according to Claim 7, in which a first control device (38_{H,O}) is provided and is designed in such a manner that, a purging valve (22_{H,O}) for purging of the purging module (6_{H,O}) is opened when the voltage regulator (38_{H,O}) reaches a lower control limit value.

9. Fuel cell installation (2A, B) according to Claim 7 or 8, in which a first gas line (14_{O}) is connected to a first purging module (6_{O} in order to supply a first residual reaction gas from the main module (4A), with the first purging module (6_{O}) also being connected to a reaction gas supply line (12_{H}) in order to supply a second reaction gas as fresh gas.

10. Fuel cell installation (2A, B) according to Claim 9, in which a second gas line (14_{H}) is connected to a second purging module (6_{H}) in order to supply a second residual reaction gas from the main module (4A), with the second purging module (6_{H}) also being connected to a first reaction gas supply line (12_{O}) in order to supply the first reaction gas as fresh gas.

11. Fuel cell installation (2A, B) according to Claim 9 and 10, in which the output side of the first purging module (6_{O}) is connected via a residual fresh gas line (18_{H}) for the second reaction gas, which is supplied to the first purging module (6_{O}), to the input side of the second purging module (6_{H}) and vice versa.

12. Fuel cell installation (2A, B) according to Claim 9, and respectively 10 or 11, in which the output sides of the first and second purging module (6_{O,H}) are respectively associated with only one first and second purging valve (22_{O,H}), respectively, in order to purge the first and second residual reaction gas, respectively, as required.

13. Fuel cell installation (2A, B) according to one of Claims 1 to 6, in which the last module element (8_{H,O}) in the flow direction of the reaction gas in the main module (4B) is in the form of a purging cell stack (42_{H,O}), and the secondary module is in the form of an autonomous unit as a residual gas block (44).

14. Fuel cell installation (2A, B) according to Claim 13, in which a second control device (46_{H,O}) is provided and is designed in such a manner that a purging valve (22_{H},_{O}) for purging of the purging cell stack (42_{H,O}) is opened when the purging cell stack (42_{H,O}) reaches a lower voltage limit value, such that the residual reaction gas that has been purged is supplied via the gas line (14_{H,O}) to the residual gas block (44).

15. Fuel cell installation (2A, B) according to Claim 14, in which the purging valve (22_{H,O}) is arranged on the output side of the residual gas block (44).

16. Fuel cell installation (2A, B) according to Claim 15 or 14, in which the main module (4B) has a first purging cell stack (42_{O}) for purging of a first residual reaction gas, as well as a second purging cell stack (42_{H}) for purging of a second residual reaction gas, and a second control device (46_{O,H}) for monitoring of the voltage of the respective purging cell stack (42_{O,H}) is provided for each purging cell stack (42_{O,H}) and is in each case designed in such a manner that the purging valve (22_{H,O}) which is associated with the respective purging cell stack (42_{H,O}) is opened when a respective lower limit value is reached.

17. Fuel cell installation (2A, B) according to one of Claims 13 to 16, in which the input side of the residual gas block (44) is connected to a reaction gas supply line (12_{H}) and a third control device (48) is provided and is designed in such a manner that a further reaction gas valve (58_{H}) for supplying the residual gas block (44) with fresh reaction gas is opened when the residual gas block (44) reaches a lower voltage limit value.

18. Fuel cell installation (2A, B) according to one of Claims 13 to 17, in which the input side of the residual gas block (44) is connected to a reaction gas supply line (12_{H}) and a third control device (48) is provided and is designed in such a manner that the reaction gas valve (58_{H}) is opened when the residual gas block (44) undershoots a voltage set value, in such a manner that the reaction gases are supplied with stoichiometric metering to the residual gas block (44).

19. Fuel cell installation (2A, B) according to one of Claims 13 to 18, in which the input side of the residual gas block (44) is connected to a reaction gas supply line (12_{H}), and a third control device (48) for monitoring of the voltage profile and current profile of the residual gas block (44) is designed in such a manner that an alarm signal is emitted when the voltage value and current value rise above a limit value.

20. Method for operation of a fuel cell installation (2A, B), in which a fuel cell main module (4A, B) is connected to a main load circuit (30A, B) and a fuel cell secondary module (6_{H,O}; 44) is connected to a secondary load circuit (32A, B) in such a manner that the main module and the secondary module are connected electrically independently of one another, with a residual reaction gas being supplied from the main module (4A, B) to the secondary module (6_{H,O}; 44).

## Revendications

1. Installation (2A, B) de piles à combustible comprenant un module (4A, B) principal de piles à combustible, qui est raccordé à un circuit (30A, B) de charge principal, et comprenant un module (6_{H}, _{O}, 44) secondaire de piles à combustible, qui est raccordé à un circuit (32A, B) de courant de charge secondaire, dans lequel le module (4A, B) principal et le module (6_{H, O}, 44) secondaire sont montés en étant indépendants l'un de l'autre du point de vue électrique, et dans lequel il est prévu pour un gaz de réaction restant un conduit (14_{H, O}) pour du gaz, qui met le module (4A, B) principal côté sortie en communication avec le module (6_{H, O}, 44) secondaire côté entrée.

2. Installation (2A, B) de piles à combustible suivant la revendication 1, dans laquelle le module (4A, B) principal comprend plusieurs sous-modules (8_{H, O}) montés en cascade.

3. Installation (2A, B) de piles à combustible suivant la revendication 1 ou 2, dans laquelle il est prévu un régulateur (36_{H, O} ; 48) de tension, qui régule la tension du module (6_{H, O} ; 42_{H, O}) secondaire de piles dans le circuit (32A, B) de charge secondaire.

4. Installation (2A, B) de piles à combustible suivant la revendication 3, dans laquelle il est monté dans le circuit (32A, B) de charge secondaire une charge (34_{H, O}) électronique qui peut être réglée par le régulateur ((36_{H, O}; 48) de tension.

5. Installation (2A, B) de piles à combustible suivant l'une des revendications précédentes, qui est telle qu'il est tiré parti de l'énergie électrique mise à disposition par le module (6_{H, O} ; 44) secondaire de piles pour l'alimentation de l'installation (2A, B) de piles à combustible.

6. Installation (2A, B) de piles à combustible suivant l'une des revendications précédentes, dans laquelle il est prévu, entre le module (4A, B) principal et le module (6_{H, O} ; 44) secondaire, un séparateur (16_{H, O}) d'eau pour le gaz de réaction restant.

7. Installation (2A, B) de piles à combustible suivant l'une des revendications précédentes, dans laquelle le module (4A) principal forme, ensemble avec le module (6_{H, O}) secondaire, un module de piles à combustible et le module secondaire est constitué en module (6_{H}, _{O}) de lavage du module de piles à combustible.

8. Installation (2A, B) de piles à combustible suivant la revendication 7, dans laquelle il est prévu un premier dispositif (38_{H, O}) de commande, qui est tel que lorsqu'une valeur limite de régulation du régulateur (36_{H, O}) de la tension est atteinte, l'ouverture d'une vanne (22_{H, O}) de lavage est provoquée pour laver le module (6_{H, O}) de lavage.

9. Installation (2A, B) de piles à combustible suivant la revendication 7 ou 8, dans laquelle un premier conduit (14_{O}) pour du gaz communique avec un premier module (6_{O}) de lavage pour apporter un premier gaz de réaction restant à partir du module (4A) principal, le premier module (6_{O}) de lavage étant raccordé, en outre, à un conduit (12_{H}) pour apporter un deuxième gaz de réaction en tant que gaz frais.

10. Installation (2A, B) de piles à combustible suivant la revendication 9, dans laquelle un deuxième conduit (14_{H}) pour du gaz communique avec un deuxième module (6_{H}) de lavage pour apporter un deuxième gaz de réaction restant provenant du module (4A) principal, le deuxième module (6_{H}) de lavage étant raccordé, en outre, à un premier conduit (12_{O}) pour l'apport du premier gaz de réaction en tant que gaz frais.

11. Installation (2A, B) de piles à combustible suivant la revendication 9 et 10, dans laquelle le premier module (6_{O}) de lavage communique, côté sortie, par un conduit (18_{H}) de gaz frais restant pour le deuxième gaz de réaction apporté au premier module (6_{O}) de lavage avec le deuxième module (6_{H}) de lavage côté entrée et inversement.

12. Installation (2A, B) de piles à combustible suivant la revendication 9 ou 10 ou 11, dans laquelle il est associé au premier ou au deuxième module (6_{O, H}) de lavage, côté sortie, respectivement seulement une première ou une deuxième vanne (22_{O, H}) de lavage pour laver en cas de besoin le premier ou le deuxième gaz de réaction restant.

13. Installation (2A, B) de piles à combustible suivant l'une des revendications 1 à 6, dans laquelle le dernier sous-module (8_{H, O}) du module (4B) principal dans le sens du courant du gaz de réaction est constitué en empilement (42_{H, O}) de cellules de lavage, et le module secondaire est constitué en unité de construction autonome sous la forme d'un bloc (44) pour du gaz restant.

14. Installation (2A, B) de piles à combustible suivant la revendication 13, dans laquelle il est prévu un deuxième dispositif (46_{H, O}) de commande qui est tel que lorsqu'une valeur limite inférieure de tension de l'empilement (42_{H, O}) de cellules de lavage est atteinte, l'ouverture d'une vanne (22_{H, O}) de lavage pour laver l'empilement (42_{H, O}) de cellules de lavage est provoquée, de sorte que le gaz de réaction restant lavé est envoyé par le conduit (14_{H, O}) pour du gaz au bloc (44) pour du gaz restant.

15. Installation (2A, B) de piles à combustible suivant la revendication 14, dans laquelle la vanne (22_{H, O}) de lavage est disposée, côté sortie, par rapport au bloc (44) pour du gaz restant.

16. Installation (2A, B) de piles à combustible suivant la revendication 15 ou 14, dans laquelle le module (4B) principal a un premier empilement (42_{O}) de cellules de lavage pour laver un premier gaz de réaction restant, ainsi qu'un deuxième empilement (42_{H}) de cellules de lavage pour laver un deuxième gaz de réaction restant, et il est prévu, pour chaque empilement (42_{O, H}) de cellules de lavage, un deuxième dispositif (46_{O, H}) de commande pour contrôler la tension de l'empilement (42_{O, H}) de cellules de lavage respectif, qui est telle que lorsqu'une valeur limite inférieure est atteinte respectivement, la vanne (22_{H, O}) de lavage associée à l'empilement (42_{H, O}) de cellules de lavage respectif est ouverte.

17. Installation (2A, B) de piles à combustible suivant l'une des revendications 13 à 16, dans laquelle le bloc (44) pour du gaz restant est relié, côté entrée, au conduit (12_{H}) d'apport de gaz de réaction, et il est prévu un troisième dispositif (48) de commande qui est tel que lorsqu'une valeur limite inférieure de tension du bloc (44) pour du gaz restant est atteinte, une autre vanne (58_{H}) pour du gaz de réaction est ouverte pour l'alimentation du bloc (44) pour du gaz restant en gaz de réaction frais.

18. Installation (2A, B) de piles à combustible suivant l'une des revendications 13 à 17, dans laquelle le bloc (44) pour du gaz restant communique, du côté entrée, avec un conduit (12_{H}) d'apport de gaz de réaction, et il est prévu un troisième dispositif (48) de commande qui est tel que lorsqu'on passe en dessous d'une valeur de consigne de tension du bloc (44) pour le gaz restant, la vanne (58_{H}) du gaz de réaction est ouverte, de sorte que les gaz de réaction peuvent être apportés en une quantité stoechiométrique au bloc (44) pour le gaz restant.

19. Installation (2A, B) de piles à combustible suivant l'une des revendications 13 à 18, dans laquelle le bloc (44) pour du gaz restant communique, du côté entrée, avec un conduit (12_{H}) d'apport de gaz de réaction, et il est formé un troisième dispositif (48) de commande pour le contrôle de la courbe de tension et de courant du bloc (44) pour du gaz restant, de sorte que lorsque la valeur de la tension et du courant augmente au-delà d'une valeur limite, un signal d'alerte est émis.

20. Procédé pour faire fonctionner une installation (2A, B) de piles à combustible, dans laquelle un module (4A, B) principal de piles à combustible est raccordé à un circuit (30A, B) de charge principal et un module (6_{H, O}; 44) secondaire de piles à combustible à un circuit (32A, B) de charge secondaire, de façon à ce que le module principal et le module secondaire soient montés indépendamment l'un de l'autre du point de vue électrique, un gaz de réaction restant étant apporté du module (4A, B) principal au module (6_{H, O} ; 44) secondaire.
